# EUROPEAN PATENT APPLICATION

(11) **EP 4 631 402 A1**
(43) Date of publication of application: **15.10.2025**
(21) Application number: 23899722.5
(22) Date of filing: 15.11.2023
(51) Int. Cl.: A47J 27/00, A47J 27/08, A47J 36/00

(54) **RICE COOKING APPLIANCE**

(30) Priority: 05.12.2022 CN 202211545542
(71) Applicant: Joyoung Company Limited, Jinan, Shandong 250118 (CN)
(72) Inventor: ZHU, Zechun, Jinan, Shandong 250118 (CN); WANG, Yuan, Jinan, Shandong 250118 (CN); WANG, Changming, Jinan, Shandong 250118 (CN); ZHANG, Gensen, Jinan, Shandong 250118 (CN)
(74) Representative: advotec.
(86) International application number: PCT/CN2023/131717
(87) International publication number: WO 2024/120142

(57) **Abstract**

A rice cooking appliance, comprising a pot body (10), a pot lid (20), and a liner (30). The liner (30) is removably arranged in the pot body (10); the inner side of the liner (30) is in contact with rice by means of a metal layer; the liner (30) comprises a bottom wall (31) and a side wall (32); hydrophilic patterns are provided in an array on the inner surface of the liner (30); the hydrophilic patterns comprise independent rice slurry recesses; the bottom wall (31) is provided with first hydrophilic patterns, the side wall (32) is provided with second hydrophilic patterns, and the hydrophilic capability of the second hydrophilic patterns is less than the hydrophilic capability of the first hydrophilic patterns. The inner wall of the coating-free liner (30) can collect part of rice slurry between the rice and the inner wall after cooking is completed, so as to increase the hydrophilicity; the first hydrophilic patterns located at the bottom wall (31) mainly function to maintain a water film so as to prevent the water film of a heated portion of the liner (30) from disappearing too quickly, such that a non-stick state can be maintained in a long-term heat preservation process; the hydrophilic capability of the second hydrophilic patterns is less than the hydrophilic capability of the first hydrophilic patterns, so that the side wall (32) has less capability of maintaining a water film than the bottom wall (31), thereby avoiding that the rice on the side wall (32) has high stickiness and is easy to remain due to excessive moisture.

## Description

The present application claims the priority to Chinese Patent Application No. CN202211545542.8, titled "RICE COOKING APPLIANCE", filed on December 5, 2022 with the China National Intellectual Property Administration, which is incorporated herein by reference in its entirety.

### FIELD

The present application relates to the technical field of kitchen appliances, and in particular to a rice cooking appliance.

### BACKGROUND

Existing rice cooking appliances such as electric rice cookers and pressure cookers are equipped with coating-free inner containers, like stainless steel inner containers. These inner containers can have a certain non-stick performance through generating a water film between the inner container and rice. The stainless steel inner containers, however, rely on the presence of this water film for their non-stick properties. A heated part of the bottom wall of the inner container tends to cause the water film to disappear. In contrast, side walls, which receive less heat, are prone to having an excess of moisture, leading to over-gelatinization of the rice. As a result, the rice on the bottom wall of the inner container is more likely to lose its water film, becomes scorched, and forms lumps after a long period of keeping warm, while the rice on the side walls has a high viscosity, making it easy for rice grains or clumps to stick on.

### SUMMARY

A rice cooking appliance is provided according to the present application to solve at least one of the above technical problems.

Technical solutions adopted by the present application are as follows.

A rice cooking appliance is provided according to the present application, including a pot body, a pot lid, and an inner container. The inner container is removably disposed in the pot body, and an inner surface of the inner container can be in contact with rice by means of a metal layer. The inner container includes a bottom wall and a side wall. Hydrophilic patterns are provided in an array on the inner surface of the inner container. The hydrophilic patterns include independent rice slurry recesses. The bottom wall is provided with a first hydrophilic pattern, and the side wall is provided with a second hydrophilic pattern. The hydrophilic capability of the second hydrophilic pattern is weaker than the hydrophilic capability of the first hydrophilic pattern.

As a preferred embodiment of the present application, the first hydrophilic pattern includes multiple first rice slurry recesses, and the second hydrophilic pattern includes multiple second rice slurry recesses. The multiple second rice slurry recesses on the side wall are obtained by arraying the multiple first rice slurry recesses, and, shapes of the multiple second rice slurry recesses are obtained through transforming shapes of the multiple first rice slurry recesses. The second rice slurry recesses at least each have a vertical dimension transformed along a depth direction of the side wall, and the vertical dimension is greater than an original vertical dimension of the first rice slurry recesses before transformation.

As a preferred embodiment of the present application, the second rice slurry recesses at least have a horizontal dimension transformed along a circumferential direction of the side wall, and the horizontal dimension is smaller than an original horizontal dimension of the first rice slurry recesses before transformation.

As a preferred embodiment of the present application, the vertical dimension is greater than the horizontal dimension.

As a preferred embodiment of the present application, the second hydrophilic pattern is of a first array on the side wall, and the first array has multiple arc-shaped array lines, which at least include array segments extending towards the bottom wall.

As a preferred embodiment of the present application, an arrangement density of the rice slurry recesses on the inner surface of the inner container is ranged from 8 to 2500 recesses per square centimeter.

As a preferred embodiment of the present application, a partition structure is provided between adjacent rice slurry recesses to keep each rice slurry recess independent.

As a preferred embodiment of the present application, in an array unit group composed of the rice slurry recesses and the partition structure, an area occupied by the rice slurry recesses is greater than that occupied by the partition structure.

As a preferred embodiment of the present application, a ratio b/a of the vertical dimension to the original vertical dimension is in the range of 1<b/a≤1.6.

As a preferred embodiment of the present application, a ratio d/c of the horizontal dimension to the original horizontal dimension is in the range of 0.3≤d/c<1.

By adopting the aforementioned technical solution, the beneficial effects achieved by the present application are as follows.

The inner surface of the inner container is provided with the hydrophilic patterns arranged in an array, with the first hydrophilic pattern being on the bottom wall and the second hydrophilic pattern being on the side wall. Since the hydrophilic patterns have individual rice slurry recesses, the inner wall of the coating-free inner container can collect some of the rice slurry between the cooked rice and the inner wall after cooking, thereby enhancing hydrophilicity. The first hydrophilic pattern on the bottom wall primarily serves to maintain a water film, preventing the water film on the heated portion of the inner container from dissipating too quickly. This ensures non-stick performance during prolonged heat preservation. Given that the hydrophilic ability of the second hydrophilic pattern is weaker than that of the first hydrophilic pattern, the side wall has a reduced capacity to maintain a water film compared to the bottom wall. This prevents the rice on the side wall from becoming overly wet, which could otherwise increase viscosity and cause more residue.

### BRIEF DESCRIPTION OF THE DRAWINGS

The accompanying drawings described herein are used for providing a further understanding of the present application, and form a part of the present application. Exemplary embodiments of the present application and descriptions thereof are for explaining the present application, and do not constitute any inappropriate limitation to the present application. In the accompanying drawings:
FIG. 1 is a cross-sectional view of a cooking appliance provided according to an embodiment of the present application;
FIG. 2 is a cross-sectional view of an inner container provided according to an embodiment of the present application;
FIG. 3 is a top structural view of an inner container provided according to an embodiment of the present application;
FIG. 4-1 is a partial schematic view of a S1-bottom in a first embodiment of the present application;
FIG. 4-2 is a partial schematic view of a S1-side in a first embodiment of the present application;
FIG. 5-1 is a partial schematic view of a S2-bottom in a second embodiment of the present application;
FIG. 5-2 is a partial schematic view of a S2-side-1 in a second embodiment of the present application;
FIG. 5-3 is a partial schematic view of a S2-side-2 in a second embodiment of the present application;
FIG. 6-1 is a partial schematic view of a S3-bottom in a third embodiment of the present application;
FIG. 6-2 is a partial schematic view of a S3-side-1 in a third embodiment of the present application;
FIG. 6-3 is a partial schematic view of a S3-side-2 in a third embodiment of the present application;
FIG. 7 is a schematic view of an arc-shaped array line provided according to an embodiment of the present application;
FIG. 8 is a schematic view of a partition structure provided according to an embodiment of the present application.

Reference numerals in the drawings are as follows:
10 pot body; 105 heating device;
20 pot lid;
30 inner container; 31 bottom wall; 32 side wall; 33 arc-shaped array line; 301 cooking chamber; 302 first rice slurry recess; 303 second rice slurry recess; 304 partition structure.

### DETAILED DESCRIPTION OF THE EMBODIMENTS

To illustrate the overall concept of the present application more clearly, a detailed description will be given below by way of examples in conjunction with the accompanying drawings in the specification.

Various specific details are set forth in following description to facilitate a full understanding of the present application. The present application may be implemented in a manner different from those described herein. Therefore, the present application is not limited by the specific embodiments disclosed hereinafter.

In the description of the present application, it should be understood that an orientation or positional relationship indicated by terms such as "top", "bottom", "inner", "outer", "axial", "radial", "circumferential", or the like is defined based on the accompanying drawings, which is intended to facilitate description of the present application and to simplify the description, rather than to indicate or imply that a device or element referred to must have a particular orientation or has to be constructed and operated in a particular orientation, and therefore should not be construed as limiting the present application.

In the present application, unless otherwise explicitly specified and defined, terms such as "mount", "link", "connect", and "fix" should be understood in a broad sense. For example, the terms may imply a fixed connection, a detachable connection, or an integral connection; a mechanical connection, an electrical connection, or a communication; a direct connection or an indirect connection through an intermediate media; an internal communication inside two elements or an interaction relationship between the two elements. Those skilled in the art should understand specific meanings of the above terms in the present application based on specific situations.

In the present application, unless clearly specified or defined otherwise, the first feature being "on" the second feature or "under" the second feature indicates that the first feature is directly in contact with the second feature or indirectly in contact with the second feature via an intermediate medium. In the description of the specification, descriptions referring to terms such as "an embodiment", "some embodiments", "examples", "specific examples", or "some examples" mean that the specific features, structures, materials, or characteristics described in conjunction with the embodiment or example are included in at least one embodiment or example of the present application. In this specification, the schematic expressions of the above terms are unnecessarily directed to a same embodiment or example. Furthermore, the specific features, structures, materials or characteristics described may be combined in any one or more embodiments or examples in a suitable manner.

A rice cooking appliance is provided according to the present application, which may be an electric rice cooker or a pressure cooker. In some other embodiments, it may also be other cooking appliances capable of cooking rice.

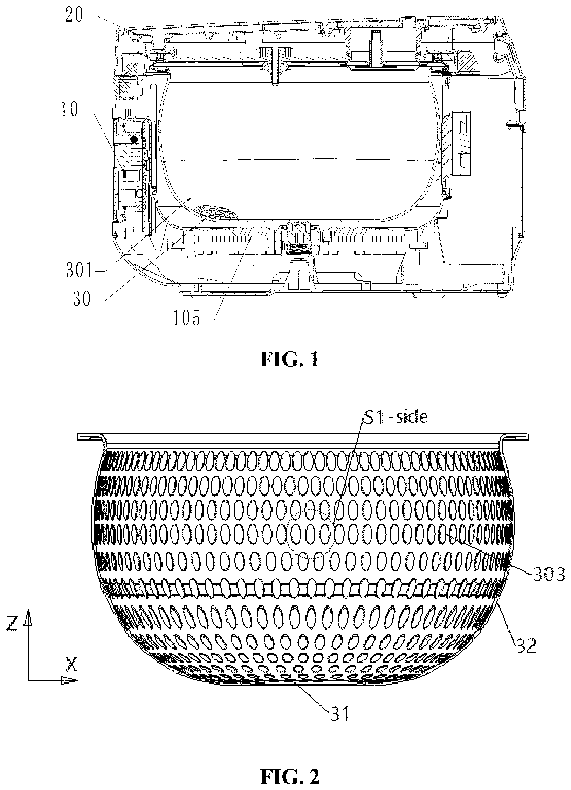

Referring to FIG. 1, an electric rice cooker is illustrated. The electric rice cooker includes a pot body 10, a pot lid 20, and an inner container 30. The inner container 30 can be placed in the pot body 10. An inner surface of the inner container 30 is in contact with rice through a metal layer. The pot lid 20 can cover on the pot body 10. The pot body 10 is provided with a heating device 105 for heating the inner container 30. During the cooking process, a mixture of rice and water can be put into a cooking chamber 301 in the inner container 30. Under the heating of the heating device 105 at the bottom of the inner container 30, the rice can be cooked.

In a specific embodiment of the present application, the cooking appliance adopts a non-coated or coating-free inner container for rice cooking. Most existing inner containers are coated inner containers, that is, a Teflon coating (scientific name: polytetrafluoroethylene, PTFE) is applied onto the inner surface of the inner container. The non-coated inner container in the present application, in contrast to the above-mentioned coated inner container, does not have a coating applied onto the base material of the inner container. Therefore, the inner side wall of the inner container is a metal layer that is in contact with food. The metal layer may be mad of stainless steel. During cooking, food is in a direct contact with the inner container and is cooked through the metal layer of the inner container, thus eliminating the dietary and health problems caused by coating peeling of the coated inner container and the coating itself.

Existing coating-free inner containers, such as stainless steel inner containers, may have a certain degree of non-stick performance by generating a water film between the inner container and the rice. The stainless steel inner containers, however, rely on the presence of the water film for non-stick properties. The heated part of the bottom wall tends to cause the water film to disappear, while the side wall, which receives less heat, is prone to having an excess of moisture, leading to over-gelatinization of the rice. As a result, the rice on the bottom wall is more likely to lose its water film and become scorched and form lumps after a long period of keeping warm, and the rice on the side wall has a high viscosity, making it easy for rice grains or clumps to stick on, which is difficult to clean.

To solve the problems of rice sticking to the bottom wall of the coating-free inner container after a long period of keeping warm and the high viscosity of rice on the side wall that makes it difficult to clean, the inner container of the rice cooking appliance in the present application is specifically designed as follows.

As shown in FIGS. 1, 2, and 3, the inner container 30 includes a bottom wall 31, a side wall 32, and a cooking chamber 301. An upper part of the cooking chamber 301 is open. The side wall 32 has a depth direction which extends from a side of the bottom wall 31 towards an open side of the cooking chamber 301 and a circumferential direction which extends along a circumference of the bottom wall 31. Hydrophilic patterns are provided in an array on the inner surface of the inner container 30. The hydrophilic patterns include independent rice slurry recesses. The bottom wall 31 is provided with a first hydrophilic pattern, and the side wall 32 is provided with a second hydrophilic pattern. The hydrophilic capability of the second hydrophilic pattern is weaker than that of the first hydrophilic pattern. The main function of the hydrophilic patterns in the present application is to enhance the hydrophilic capability of the inner surface of the metal layer. The specific embodiment is just an example. Any means used by those skilled in the art to enhance the hydrophilic capability of the stainless steel inner surface by setting patterns to achieve non-stick properties should fall within the scope of the hydrophilic patterns of the present application.

During cooking, the heating device 105 heats at least the bottom part of the inner container. In some specific embodiments, the heating device 105 also heats part of the side wall of the inner container. The hydrophilic patterns are provided in an array on the inner surface of the inner container, with the first hydrophilic pattern being on the bottom wall 31 and the second hydrophilic pattern being on the side wall. Since the hydrophilic patterns have independent rice slurry recesses, the inner wall of the coating-free inner container can collect part of the rice slurry between the rice and the inner wall after cooking, so as to increase hydrophilic capability. The first hydrophilic pattern on the bottom wall mainly play a role in maintaining the water film to prevent the water film on the heated part of the inner container from disappearing too quickly, thus maintaining non-stick properties during a long period of keeping warm. Since the hydrophilic capability of the second hydrophilic pattern is weaker than that of the first hydrophilic pattern, the ability of the side wall to maintain the water film is weaker than that of the bottom wall, thereby avoiding excessive moisture on the side wall, which would otherwise make the rice too wet, highly viscous, and prone to sticking.

Specifically, in order to ensure the hydrophilic capability of the second hydrophilic pattern to be weaker than that of the first hydrophilic pattern, following settings are made.

The first hydrophilic pattern has multiple first rice slurry recesses 302, and the second hydrophilic pattern has multiple second rice slurry recesses 303. The multiple second rice slurry recesses 303 on the side wall are obtained by arraying the multiple first rice slurry recesses 302, and, shapes of the multiple second rice slurry recesses 303 are obtained through transforming shapes of the multiple first rice slurry recesses 302.

The multiple second rice slurry recesses 303 each at least have a vertical dimension transformed along the depth direction of the side wall. Compared with the original vertical dimension of the multiple first rice slurry recesses 302 before transformation, this vertical dimension is greater than the original vertical dimension.

The multiple second rice slurry recesses 303 have a dual function. They not only have the ability to retain part of the rice slurry on the side wall but also can transport part of the rice slurry to the bottom wall. Specifically, on one hand, the second rice slurry recesses 303 supplement part of the rice slurry for the multiple first rice slurry recesses 302, which can avoid an excessive amount of rice slurry on the side wall while also replenishing water for the bottom wall. On the other hand, the second rice slurry recesses 303 have the ability to lock in part of the rice slurry, thus maintaining the presence of the water film for the rice on the side wall. To balance the rice-slurry-transporting ability and the rice-slurry-locking ability of the multiple second rice slurry recesses 303, the rice slurry recesses on the side wall are set up differently.

Specifically, following settings are made.

The hydrophilic patterns have independent rice slurry recesses, which mean that the rice slurry recesses on the side wall and the bottom wall are all set up independently and each has a certain ability to lock in the rice slurry.

The multiple second rice slurry recesses 303 on the side wall are obtained by arraying the multiple first rice slurry recesses 302, and, shapes of the multiple second rice slurry recesses 303 are obtained through transforming shapes of the multiple first rice slurry recesses 302. This implies that the rice slurry recesses on the side wall and the bottom wall have similar shapes and structures and can be arrayed together, which facilitates transporting rice slurry between the side wall and the bottom wall.

The rice slurry recesses have basic shapes, such as circular, hexagonal, square, rectangular or other shapes. The rice slurry recesses inside the inner container are arranged in basic arrays, such as rectangular arrays and circular arrays. The rice slurry recesses on the side wall and the bottom wall may be obtained through a same arraying method. The transformation includes operations such as rotation and extension. Due to the transformation, the shapes of the multiple second rice slurry recesses 303 are different from that of the multiple first rice slurry recesses 302. Moreover, the depth direction of the side wall is not necessarily the arraying direction and may form an angle with the arraying direction.

Compared with the original vertical dimension of the multiple first rice slurry recesses 302 before transformation, the vertical dimension after transformation is greater. This means that the multiple second rice slurry recesses 303 have the ability to transport excess rice slurry towards the bottom wall along the depth direction of the side wall. The rice slurry on the side wall is mainly influenced by the interaction of the vertical gravitational force, the resistance of the rice, and the adhesion force of the multiple second rice slurry recesses 303. Since rice is relatively denser compared with other food ingredients, it offers greater resistance to the flow of rice slurry. The multiple second rice slurry recesses 303 is designed to change the contact form between the rice and the side wall of the inner container, which can overcome the negative influence brought about by the dense rice. The vertical dimension refers to the dimension of the second rice slurry recesses along the depth direction of the side wall. A greater dimension in the depth direction compared with the original vertical dimension of the multiple first rice slurry recesses 302 before transformation enables the rice slurry on the side wall to better flow along the depth direction of the side wall under the action of gravity. When excess rice slurry is generated during rice cooking, part of it is stored in the independent second rice slurry recesses 303, and the excess part is transported to the bottom wall along the depth direction, thus avoiding excessive moisture on the side wall and excessive dryness on the bottom wall.

Examples are as follows.

The first embodiment is described as follows.

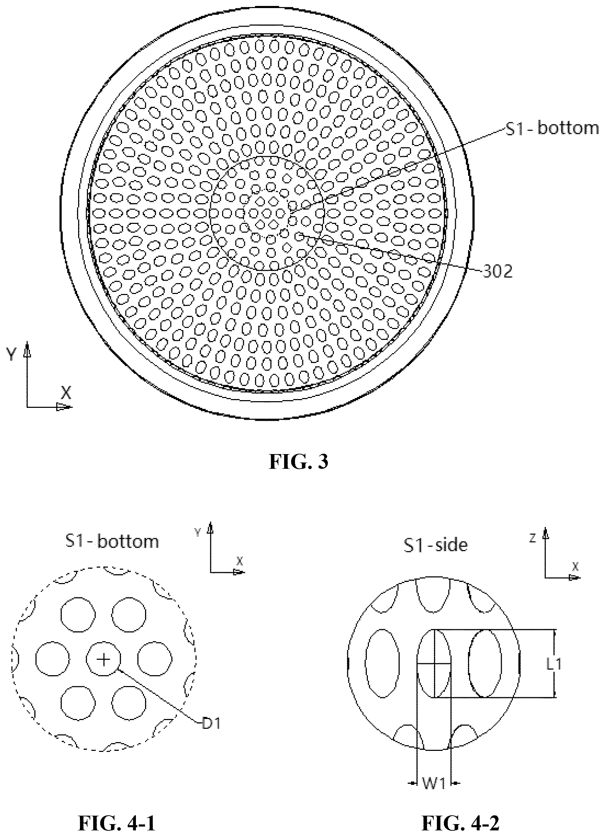

In a specific embodiment as shown in FIGS. 4-1 and 4-2, the rice slurry recesses are circular-shaped, and the rice slurry recesses are arranged in a circular array. The rice slurry recesses are arrayed on the radial and circumferential directions.

FIG. 4-1 shows a partially enlarged view [S1-Bottom] of the multiple first rice slurry recesses 302 on the bottom wall. The multiple first rice slurry recesses 302 each has a circular shape with a diameter of D1. FIG. 4-2 shows a partially enlarged view [S1-Side] of the second rice slurry recesses 303 on the side wall. A direction along Z-axis in the shown coordinate axis is the depth direction. In this case, the vertical dimension of the second rice slurry recesses 303 along the depth direction is L1, and the horizontal dimension along the circumferential direction is W1.

The multiple first rice slurry recesses 302 are circular in shape. No matter how the multiple first rice slurry recesses 302 are arrayed and transformed, the second rice slurry recesses 303 can only be elliptical in shape. At this time, L1 is the major axis of the ellipse, and W1 is the minor axis of the ellipse. Both the major axis and the minor axis of the ellipse pass through the center of the ellipse and connect the two opposite sides of the ellipse. Therefore, when the vertical dimension of the second rice slurry recesses 303 along the depth direction is the major axis of the ellipse, the original vertical dimension of the multiple first rice slurry recesses 302 before transformation is the diameter of the circle. When the horizontal dimension of the multiple second rice slurry recesses 303 along the circumferential direction is the minor axis of the ellipse, the original horizontal dimension of the multiple first rice slurry recesses 302 before transformation is also the diameter of the circle. In this embodiment, there is a size relationship where L1 is greater than D1 and W1 is smaller than D1.

The second embodiment is described as followed.

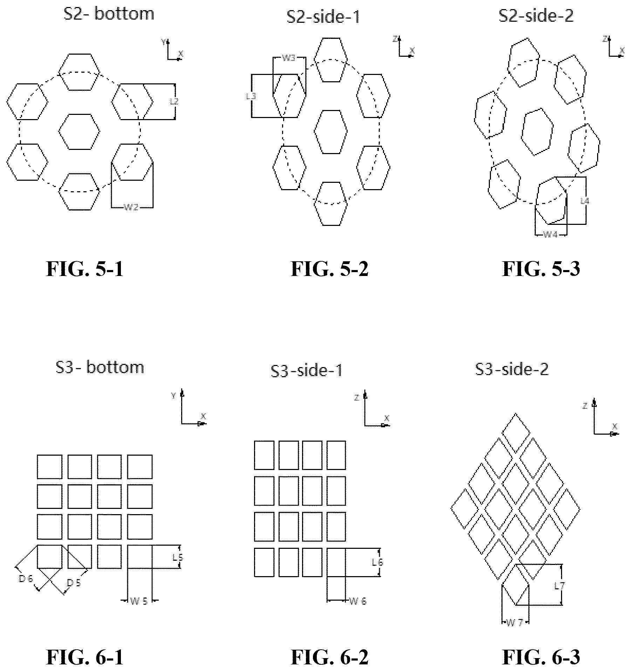

In a specific embodiment as shown in FIGS. 5-1, 5-2, and 5-3, the rice slurry recesses are hexagonal in shape, and the rice slurry recesses are arranged in a circular array. The rice slurry recesses are arrayed in the radial and circumferential directions.

FIG. 5-1 shows a partial view [S2-Bottom] of the multiple first rice slurry recesses 302 on the bottom wall. The shape of each first rice slurry recess is a hexagon with a distance between opposite sides of L2 and a distance between opposite corners of W2.

The multiple first rice slurry recesses 302 each are hexagonal in shape. After arraying and transformation, the multiple second rice slurry recesses 303 on the side wall have a shape of a similar hexagon to the original hexagon. Since the basic shape is a hexagon, different transformation methods may result in the geometric features in the depth direction being two opposite sides, two opposite corners, or other parts of the hexagon. Therefore, there can be multiple vertical dimensions.

FIG. 5-2 shows a partial view [S2-Side-1] of the multiple second rice slurry recesses 303 on the side wall. In [S2-Side-1], two opposite sides of the hexagon just happen to be in the depth direction. At this time, the dimension L3 of the multiple second rice slurry recesses 303 along the depth direction is the distance between the opposite sides of the hexagon. Correspondingly, the dimension W3 along the circumferential direction of the side wall is the distance between the opposite corners of the hexagon. At this time, since the dimension along the depth direction is the distance between the opposite sides of the hexagon and the dimension along the circumferential direction is the distance between the opposite corners of the hexagon, the original vertical dimension of the multiple first rice slurry recesses 302 before transformation is the distance L2 between the opposite sides of the hexagon in a case that the vertical dimension of the second rice slurry recesses 303 along the depth direction is the side-to-side dimension L3 of the hexagon. In a case that the horizontal dimension of the second rice slurry recesses 303 along the circumferential direction is the corner-to-corner dimension W3 of the hexagon, the original horizontal dimension of the multiple first rice slurry recesses 302 before transformation is the distance W2 between the opposite corners of the hexagon. In this embodiment, there is a size relationship where L3 is greater than L2 and W3 is smaller than W2.

FIG. 5-3 shows a partial view [S2-Side-2] of the multiple second rice slurry recesses 303 on the side wall. In [S2-Side-2], neither the opposite sides nor the opposite corners of the hexagon just happen to be in the depth direction. The directions of the opposite sides and the opposite corners both form a certain angle with the depth direction. At this time, for conveniently representing the dimension in the depth direction, the maximum distance L4 between the upper and lower endpoints of the hexagon in the depth direction can be used as the vertical dimension. Correspondingly, for conveniently representing the dimension in the circumferential direction, the maximum distance W4 between the left and right endpoints of the hexagon in the circumferential direction can be used as the horizontal dimension. At this time, since the upper and lower endpoints and the left and right endpoints are the opposite corners of the hexagon, the original vertical dimension of the multiple first rice slurry recesses 302 before transformation is the distance W2 between the opposite corners of the hexagon in a case that the vertical dimension of the second rice slurry recesses 303 along the depth direction is the maximum distance L4 between the upper and lower endpoints of the hexagon. In a case that the horizontal dimension of the multiple second rice slurry recesses 303 along the circumferential direction is the maximum distance W4 between the left and right endpoints of the hexagon, the original horizontal dimension of the multiple first rice slurry recesses 302 before transformation is the distance W2 between the opposite corners of the hexagon. In this embodiment, there is a size relationship where L4 is greater than W2 and W4 is weaker than W2.

The third embodiment is described as follows.

In a specific embodiment as shown in FIGS. 6-1, 6-2, and 6-3, the rice slurry recesses are rectangular in shape, and the rice slurry recesses are arranged in a rectangular array. The rice slurry recesses are arrayed in the radial and horizontal directions.

FIG. 6-1 shows a partial view [S3-Bottom] of the multiple first rice slurry recesses 302 on the bottom wall. The shape of each first rice slurry recess is a square with the lengths of opposite sides being W5 = L5 and the distances between opposite corners being D5 = D6. In some alternative embodiments of this example, Their shape may also be a rectangle with W5 # L5.

The multiple first rice slurry recesses 302 are rectangular in shape. After arraying and transformation of the multiple first rice slurry recesses, the multiple second rice slurry recesses 303 on the side wall may each have a shape of a rectangle, a rhombus, or a parallelogram. No matter how the first rice slurry recesses are transformed, the second rice slurry recesses will have a basic shape with four sides and four corners. Therefore, different transformation methods may result in the geometric features in the depth direction being two pairs of opposite sides, two pairs of opposite corners, or other parts of the quadrilateral. As a result, there may be multiple vertical dimensions.

One possible form of the multiple second rice slurry recesses 303 is as follows. FIG. 6-2 shows a partial view [S3-Side-1] of the multiple second rice slurry recesses 303 on the side wall. In [S3-Side-1], two pairs of opposite sides of the quadrilateral just happen to be in the depth direction. At this time, the dimension L6 of the multiple second rice slurry recesses 303 along the depth direction is the spacing between one pair of opposite sides of the quadrilateral. Correspondingly, the dimension W6 along the circumferential direction of the side wall is the spacing between the other pair of opposite sides of the quadrilateral. At this time, since the depth direction and the circumferential direction correspond to the directions of the spacings between two pairs of opposite sides of the quadrilateral respectively, the original vertical dimension of the multiple first rice slurry recesses 302 before transformation is the spacing L5 between one pair of opposite sides of the quadrilateral in a case that the vertical dimension of the second rice slurry recesses 303 along the depth direction is the side-to-side dimension L6 of the quadrilateral. In a case that the horizontal dimension of the multiple second rice slurry recesses 303 along the circumferential direction is the side-to-side dimension W6 of the quadrilateral, the original horizontal dimension of the multiple first rice slurry recesses 302 before transformation is the spacing W5 between the other pair of opposite sides of the quadrilateral. In this embodiment, the shape is a square, so W5 = L5. There is a size relationship where L6 is greater than L5 or W5, and W6 is smaller than W5 or L5.

Another possible form of the multiple second rice slurry recesses 303 is as follows. FIG. 6-3 shows a partial view [S3-Side-2] of the multiple second rice slurry recesses 303 on the side wall. In [S3-Side-2], a pair of opposite corners of the quadrilateral just happens to be in the depth direction. At this time, the spacing L7 between one pair of opposite corners in the depth direction is used as the vertical dimension. Correspondingly, the spacing W7 between the other pair of opposite corners in the circumferential direction is used as the horizontal dimension. At this time, since the depth direction and the circumferential direction correspond to directions of the spacings between two pairs of opposite corners of the quadrilateral respectively, the original vertical dimension of the multiple first rice slurry recesses 302 before transformation is the corner-to-corner spacing D5 or D6 of the quadrilateral in a case that the vertical dimension of the multiple second rice slurry recesses 303 along the depth direction is the corner-to-corner spacing L7 of the quadrilateral. In a case that the horizontal dimension of the multiple second rice slurry recesses 303 along the circumferential direction is the corner-to-corner spacing W7 of the quadrilateral, the original horizontal dimension of the multiple first rice slurry recesses 302 before transformation is the corner-to-corner spacing D6 or D5 of the quadrilateral. In this embodiment, the shape is a square, so D5 = D6. There is a size relationship where L7 is greater than D5 or D6, and W7 is smaller than D6 or D5.

In summary, those skilled in the art have provided a logical relationship between the dimensions of the transformed second rice slurry recesses 303 and the pre-transformed first rice slurry recesses 302. That is, since the multiple second rice slurry recesses 303 are obtained by transforming the shape of the multiple first rice slurry recesses 302 through arraying, the shape features of the multiple second rice slurry recesses 303 in the depth direction must correspond to the shape features associated with the basic shape of the multiple first rice slurry recesses 302. Therefore, when dealing with different basic shapes, if the basic shape is a circle, the original vertical dimension is just the diameter; if the basic shape is an N-sided polygon (N > 2), the dimension of the corresponding feature (corresponding opposite sides, corresponding opposite corners, or corresponding endpoints) of the basic shape associated with this shape feature is found as the original vertical dimension based on the shape features in the depth direction (opposite sides, opposite corners, or upper and lower endpoints). Similarly, the original horizontal dimension may also be associated with the horizontal dimension according to this logical relationship.

Those skilled in the art should understand that, in the aforementioned embodiments, the basic shape of the rice slurry recesses may also be other shapes, and the rice slurry recesses may be arranged in other arrays. Different shapes and arraying methods can be freely combined. For example, circular rice slurry recesses may be arranged in a rectangular array. The transformation includes operations such as rotation and stretching, resulting in a second rice slurry recess 303 that has a different shape from the basic shape.

Based on the descriptions of the above-mentioned embodiments, the second rice slurry recess 303 at least has a horizontal dimension obtained through transformation along the circumferential direction of the side wall. Compared with the original horizontal dimension of the multiple first rice slurry recess 302 before transformation, this horizontal dimension of the second rice slurry recess is smaller.

After the arraying and transformation, the dimension along the circumferential direction becomes smaller compared to that of the original basic shape. From the perspective of the side wall of the second rice slurry recess 303, for a circular shape, the side wall in the circumferential direction changes from a circular edge to an arc-shaped edge with a larger curvature. For a hexagonal shape, the adjacent sides in the circumferential direction, which originally had an included angle of 60 degrees, change to adjacent sides with an included angle greater than 60 degrees. For a square shape, the adjacent sides in the circumferential direction, which originally had an included angle of 90 degrees, change to adjacent sides with an included angle greater than 90 degrees. Therefore, the reduction in the circumferential-direction dimension decreases the flow resistance of the rice slurry within the rice slurry recess, enhancing the fluidity of the excess rice slurry.

According to the descriptions of the above-mentioned embodiments, the vertical dimension of the second rice slurry recess 303 in the depth direction is greater than the horizontal dimension in the circumferential direction. For instance, when the basic shape is a circle or a square, the resulting second rice slurry recess 303 is in the shape of an ellipse. So, simply comparing the vertical and horizontal dimensions of the second rice slurry recess 303, there is a situation where the vertical dimension is greater than the horizontal dimension. Under some basic shapes, there may be cases where the vertical dimension is smaller than or equal to the horizontal dimension. When the vertical dimension is greater than the horizontal dimension, as a preferred option, it is ensured that the second rice slurry recess 303 definitely has the ability to transport the rice slurry in the depth direction. This is because a larger dimension in the depth direction means a longer length of the side wall of the second rice slurry recess 303 along the depth direction. The longer side wall can provide stronger guidance for the rice slurry, thus enhancing the overflow capacity of the second rice slurry recess 303 in the depth direction and weakening its ability to transport the rice slurry in the circumferential direction. This prevents the rice slurry from being transported in the circumferential direction, thereby avoiding excessive moisture and stickiness of the rice on the side wall and reducing residues.

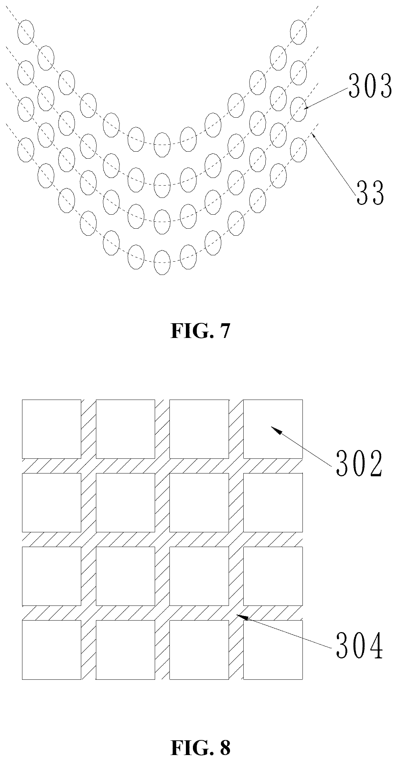

As shown in FIG. 7, the second hydrophilic pattern is of a first array on the side wall. The first array has multiple arc-shaped array lines 33, which at least include array segments extending towards the bottom wall. The second rice slurry recesses are distributed in an array along the arc-shaped array lines.

Due to the existence of transformation, the depth direction may not necessarily be consistent with the arraying direction. They can be consistent or inconsistent. The angle between the depth direction and the arraying direction in the present application can be determined based on the respective proportions of the transportation capacity and the water-locking capacity required for the second rice slurry recess 303. When the depth direction and the arraying direction are collinear, the transportation capacity of the second rice slurry recess 303 will increase, while the water-locking capacity thereof will decrease. When there is an angle between the depth direction and the arraying direction, the transportation capacity of the second rice slurry recess 303 will decrease, and the water-locking capacity thereof will increase.

The array segment of each arc-shaped array line 33 extending towards the bottom wall creates a certain included angle between the arraying direction of the second rice slurry recess 303 and the depth direction, thus balancing its transportation capacity and water-locking capacity.

In some embodiments of the present application, the arc-shaped array line 33 is a parabola that bulges downward towards the bottom-wall side, which enables the rice slurry to be transported from higher positions downward through multiple layers of rice slurry, better overcoming the resistance of compacted rice and preventing the rice slurry on the upper side of the side wall of the inner container from becoming overly wet.

The rice slurry recesses on the inner surface of the inner container have an arrangement density in the range of 8~2500 recesses per square centimeter. At this density, it can avoid the situation where the rice slurry recesses are too large, leading to an excessive amount of rice slurry being stored in the recesses, as well as the situation where the rice slurry recesses are too small, resulting in an insufficient amount of rice slurry being stored. In short, this density is more suitable for rice cooking. The inner container has fewer rice residues after being used, making it convenient for cleaning. In this case, the area occupied by a single array unit is ranged between 12.5 and 0.04 square millimeters. Consequently, the center-to-center distance between adjacent array units is ranged between 0.2 and 3.5mm. Generally, the width of a rice grain is about 2mm, and its water-absorption swelling rate is approximately 1.5~2 times. Therefore, the width of the rice after water absorption is no less than about 3mm. This ensures that there is at least one rice slurry recess for at least one rice-grain scale. When the array units are too dense, for example, exceeding 2500 recesses per square centimeter, on the one hand, it is not convenient to machine and form the rice slurry recesses, and on the other hand, the rice slurry recesses will be too close to each other and unable to lock in the rice slurry, causing the water film to easily disappear. In some alternative embodiments of the present application, a preferred density could be ranged from 100 to 200 recesses per square centimeter, specifically around 120 recesses per square centimeter, or other values such as 30, 50, 60, 80, 90, 150, 200, 400, 500, 1000, 2000 recesses per square centimeter. The above-mentioned array units include the dimensions of partition structures in addition to the rice slurry recesses. Specifically, it is preferred that the width of the rice slurry recess is 0.6mm and the partition structure is of 0.3mm, so the center-to-center distance is 0.6 + 0.3 = 0.9mm.

In some embodiments of the present application, as shown in FIG. 8, partition structures 304 are provided between adjacent rice slurry recesses to make the rice slurry recesses independently arranged. Due to the array arrangement, the independent rice slurry recesses are separated by the partition structures 304, thus ensuring the water-locking ability of the rice slurry recesses.

In some embodiments of the present application, in the array unit group composed of the rice slurry recesses and the partition structures 304, the area occupied by the rice slurry recesses is greater than that occupied by the partition structures 304. This can avoid an excessively large proportion of the partition structures 304, which would otherwise cause more rice coming into contact with the partition structures 304. As a result, more rice slurry is stored in the rice slurry recesses rather than at the positions of the partition structures 304, so that the rice-slurry transportation and water-locking functions of the rice slurry recesses can play a role within the array unit. As shown in FIG. 8, four square rice slurry recesses and the surrounding partition structures (the shaded part) form an array unit group, where the area of the shaded part is smaller than that of the non-shaded part. The partition structures in the present application can be configured as follows. After the stainless-steel inner layer forms the rice slurry recesses, the surface of the stainless-steel inner layer connecting the adjacent rice slurry recesses serves as the partition structure of the present application. Alternatively, he connecting parts between the adjacent rice slurry recesses are processed into fine lines to form the partition structure of the present application. Alternatively, the connecting parts between the adjacent rice slurry recesses are processed to be lower or higher than the original stainless-steel inner surface, forming the partition structure of the present application.

The value range of the ratio b/a of the vertical dimension to the original vertical dimension satisfies: 1 < b/a ≤ 1.6. When the ratio is too large, it means that the dimension in the depth direction of the side wall is larger, which is not conducive to locking in the rice slurry. When the ratio is too small, it is not conducive to transporting the rice slurry. Within the above-mentioned range, a good rice cooking effect can be ensured. For example, if the vertical dimension is 0.9mm, the original vertical dimension may be ranged between 0.56mm and 0.9mm. In some alternative embodiments, the ratio can be 1.01, 1.05, 1.1, 1.2, 1.45, 1.5 or the like.

The value range of the ratio d/c of the horizontal dimension to the original horizontal dimension satisfies: 0.3 =< d/c < 1. When the ratio is too large, it means that the dimension in the circumferential direction of the side wall is larger, which is not conducive to transporting the rice slurry. When the ratio is too small, it is not conducive to locking in the rice slurry. Within the above-mentioned range, a good rice cooking effect can be ensured. For example, if the horizontal dimension is 0.4mm, the original horizontal dimension can be ranged between 0.4mm and 1.3mm. In some alternative embodiments, the ratio can be 0.8, 0.5, 0.9, 0.6, 0.75 and the like.

For parts not mentioned in the present application, the conventional technology can be adopted or referenced for implementation.

The embodiments are described in this specification in a progressive manner. Various embodiments may refer to each other for the same or similar parts, and each embodiment places emphasis on the difference from other embodiments.

The above descriptions are only embodiments of the present application and are not intended to limit the present application. Those skilled in the art can make various modifications and variations to the present application. Any modifications, equivalent substitutions, improvements and the like made within the spirit and the principle of the present application fall within the scope of the claims of the present application.

## Claims

1. A rice cooking appliance, comprising a pot body, a pot lid, and an inner container, wherein the inner container is removably disposed in the pot body, an inner surface of the inner container is in contact with rice through a metal layer, and the inner container comprises a bottom wall and a side wall;
the inner surface of the inner container is provided with hydrophilic patterns arranged in an array, the hydrophilic patterns comprise individual rice slurry recesses, the bottom wall is provided with a first hydrophilic pattern, and the side wall is provided with a second hydrophilic pattern; and
the first hydrophilic pattern comprises a plurality of first rice slurry recesses, and the second hydrophilic pattern comprises a plurality of second rice slurry recesses, wherein the plurality of second rice slurry recesses on the side wall are obtained by arraying the plurality of first rice slurry recesses, and, shapes of the plurality of second rice slurry recesses are obtained through transforming shapes of the plurality of first rice slurry recesses, the plurality of second rice slurry recesses at least each have a vertical dimension transformed along a depth direction of the side wall, and the vertical dimension is greater than an original vertical dimension of the plurality of first rice slurry recesses before transformation.

2. The rice cooking appliance according to claim 1, wherein the second rice slurry recesses at least each have a horizontal dimension transformed along a circumferential direction of the side wall, and the horizontal dimension is smaller than an original horizontal dimension of the plurality of first rice slurry recesses before transformation.

3. The rice cooking appliance according to claim 2, wherein the vertical dimension is greater than the horizontal dimension.

4. The rice cooking appliance according to claim 1, wherein the second hydrophilic pattern is of a first array on the side wall, and the first array has a plurality of arc-shaped array lines, which at least comprises array segments extending towards the bottom wall.

5. The rice cooking appliance according to claim 1, wherein an arrangement density of the rice slurry recesses on the inner surface of the inner container is ranged from 8 to 2500 recesses per square centimeter.

6. The rice cooking appliance according to claim 1, wherein a partition structure is provided between adjacent rice slurry recesses to keep each rice slurry recess independent.

7. The rice cooking appliance according to claim 6, wherein in an array unit group composed of the rice slurry recesses and the partition structure, an area occupied by the rice slurry recesses is greater than that occupied by the partition structure.

8. The rice cooking appliance according to claim 1, wherein a ratio b/a of the vertical dimension to the original vertical dimension is in a range of 1<b/a≤1.6.

9. The rice cooking appliance according to claim 2, wherein a ratio d/c of the horizontal dimension to the original horizontal dimension is in the range of 0.3≤d/c < 1.
